# EUROPEAN PATENT APPLICATION

(11) **EP 2 546 014 A1**
(43) Date of publication of application: **16.01.2013**
(21) Application number: 11174137.7
(22) Date of filing: 15.07.2011
(51) Int. Cl.: B23D 57/00

(54) **Apparatus for driving a wire or wire-like objects**

(71) Applicant: Meyer Burger AG, 3600 Thun (CH)
(72) Inventor: Heiniger, Christoph, 3053 Münchenbuchsee (CH); Berger, Markus, 3645 Gwatt (CH)
(74) Representative: Patentbüro Paul Rosenich AG

(57) **Abstract**

The invention relates to an apparatus for driving a wire or wire-like objects, the apparatus comprising at least one roller unit (1), the roller unit (1) comprises:
a support (2),
a support roller (3) which is rotatably mounted to the support (2),
a wire receiving surface (4) which is provided on the support roller (3) for communicating with the wire, wherein the support roller (3) extends in axial direction beyond the wire receiving surface (4) at least at one side,
a drive for driving the support roller (3) with respect to the support (2), the drive comprising a stator (6) and a rotor (7),
the rotor (6) being fastened to the support roller (3) and the stator (7) being fastened to the support (2),
wherein the rotor (6) and the stator (7) are fastened to the support roller (3) and to the support (2) in an area, which extends in axial direction beyond said wire receiving surface (4).

## Description

The invention relates to an apparatus for driving and/or winding a wire or wire-like objects. The invention also relates in particular to a wire saw, a wire guide apparatus and a wire reservoir.

Wafers, e.g. for use in solar cells or semiconductor industry, are cut from a block (also called brick or ingot) of silicone or other suitable materials such as sapphire. For said cutting, a wire cutting device is provided employing a metal wire and abrasives. Usually abrasives are suspended in a fluid, together called slurry. The slurry is transported by a metal wire. Nowadays, wafers are also cut more and more using fixed abrasives, which are directly attached to the metal wire.

Wire guide rollers are part of the wire saw. They support, drive and guide the wire. Normally, there is only one wire guided as to form a wire bed allowing multiple cuts at the same time. Conceivable is a multitude of wire loops although this is not common. Normally, there are two wire guide rollers in a wire saw, but embodiments with more than two rollers are also known from prior art.

In machines known from prior art a motor external to the wire guide rollers is used for driving the wire guide rollers. Due to imperfections in the alignment of the motor with the wire guide rollers, complicated transmissions and bearings are needed to keep the wire guide rollers stable. Oscillations and even minor translations in any direction of the rollers may lead to cuts of inferior quality. It has to be considered that during operation of the wire saw, the wire guide rollers warm up and expand due to the temperature increase. In order to compensate for the thermal expansion of parts, particularly of the wire guide rollers, a complicated bearing mechanism is necessary. This makes the construction of the bearing even more complex and costly. In a typical wire saw the wire entwines the wire guide rollers up to 3000 times, i.e. the wire runs around the wire guide roller about 3000 times before leaving the wire guide roller.

The wire tension is typically 25 Newton. Therefore the bearings of the wire guide rollers need to support up to 3000 times 25 Newton.

Even though the wire guide rollers are reinforced heavily with carbon fibers, , the wire guide rollers bend under the load applied to them by the wires. To allow these deflections, the wire guide rollers are mounted on both sides by two sphere-like couplings. These couplings however are thus prone to excessive wear.

The bearings and the wire guide roller are kept together by a connecting rod. To exchange a wire guide roll, the wire web has to be removed. Then, the connecting rod has to be released. Then, the floating bearing has to be moved slightly to clear the wire guide rollers. With a suitable lifting gear the wire guide rollers have to be simultaneously supported before they can be taken out of the machine.

The resulting spatial build-up of a floating bearing, wire guide roll, locating bearing and motor results in a very long machine (big footprint), which does not comply with the requirements of space-saving assemblies.

US6098610A discloses a wire saw comprising roller units which have a stationary support and a support roller rotatably mounted to that support. The support roller carries a wire receiving surface for communicating with the cutting wire. The wire receiving surface is formed on a sleeve which sits on the support roller. The sleeve is provided with a plastic lining on which the windings of the sawing wire are guided.

An integral motor is provided for driving the roller unit. The motor is arranged within the roller unit as seen from Fig. 3 of US6098610A, i.e. completely surrounded by the wire receiving surface. The rotor of the motor is fastened to the support roller and the stator is fastened to the support.

Here, a driving axis extends through and 'curls' around a hollow support. By making the support very stiff, its bearing on the right side can be omitted. However, the longer the wire guide roller gets, the more the distal portion of the roller will oscillate or deflect. Also the supports will bend towards each other under the huge force exerted by the wire. One can expect that the amount the supports bend is not equal for both supports. In that case, the wires do not extend parallel as desired and the wafers are not as flat as desired. This results in wafers with non-parallel or wedge shaped cutting surfaces.

US5758633A also discloses a wire saw with roller units, the roller units being held at both sides by a base structure. A drive pulley is provided at one end of a roller unit for driving the support roller. An external motor and a belt transmission is necessary to drive the pulley. Such an arrangement does not allow for an uniform rotation and requires again a lot of space to accommodate, bearings, transmission belts and external motor.

Following problems arise in prior art machines:
For a precise cut, the length of the wire extending between the wire guide rollers has to be kept as short as possible in order to prevent deviation of the wire. This is recognized in US6098610A and there it is proposed to place the wire guide rollers as closely together as possible. This may work fine for small work pieces, but becomes a problem for larger work pieces having a square cross section that does not fit in the space between the roller units.

Prior art machines require a lot of space due to bearings and drive transmission belts or chains.

US6098610A uses an integral motor, however, due to the fact that the motor is accommodated within the wire receiving area, the diameter of a roller unit becomes very large.

Roller units of large diameter reduce the space between them which on the other hand would be needed for the work pieces to be cut.

Roller units of prior art machines are not easy accessible.

The object of the invention is to overcome these problems and to provide an apparatus keeping the advantage of a simple build-up while avoiding long and complicated transmission belts or chains and bearings. It was found to be important that the diameter of the support roller und thus the diameter of the wire receiving surface is reduced, to provide a space-saving assembly and at the same time providing enough space for moving the object (ingot) to be cut through the wire web.

Another objective is to better hold the support so that its distal end/portion deflects less under load (due to wire tension) and oscillates less during operation (due to dynamic effects).

For some materials and for some types of wire it is favorable to move the wire in one direction and shortly after to inverse the direction and move the wire backwards (so called pilgrim mode). To keep a maximal average wire speed (cutting speed) the acceleration and the deceleration of the wire have to be as high as possible. Pilgrim mode is used when after having past (cut) through the work piece one time, the wire can still be used for further cutting. This is especially the case when using fixed abrasives.

Today's wire saws have large footprints. To raise the output of existing production sites, it is favorable to have a better relation between the total length of the wire web(s) (excluding the additional dimensions of the bearing, transmission, motor, etc.) and the footprint per wire saw. So it is favorable to have a short assembly of bearings/wire guide roller/motor.

To reduce the downtime of wire saws due to necessary maintenance of wire guide rollers, the inventive solution shall facilitate the exchange of the wear parts (wire guide rollers or at least the sleeves which are in direct communication with the wires.

To reduce the downtime of wire saws due to bearing, motor or other breakdowns, it is - according to the invention - favorable if whole assemblies can be exchanged rather than exchanging single parts after a time consuming dismantling.

To avoid thermal dilatation it is - according to the invention - favorable that the interior of the roller units can be kept at a constant temperature level.

At the same time the inventive solution shall allow that as much as possible wire length is "stored" (winded) in a reservoir roller unit. In order avoid damaging a diamond cutting wire, the wire may not be winded in too many layers on the roller unit. In order to store as much wire as possible the length of the wire receiving surface of the roller unit has to be large. However, the inventive solution wants to avoid an additional tailstock support, in order to facilitate exchange and to minimize required space.

All these objects are achieved by an apparatus for driving a wire or wire-like objects, the apparatus comprising at least one roller unit, the roller unit comprises:
a support,
a support roller which is rotatably mounted to the support,
a wire receiving surface which is provided on the support roller for communicating with the wire, wherein the support roller extends in axial direction beyond the wire receiving surface at least at one side,
a drive for driving the support roller with respect to the support, the drive comprising a stator and a rotor,
the rotor being fastened to the support roller and the stator being fastened to the support or to another non-moving part of the apparatus,
wherein the rotor and the stator are fastened to the support roller and to the support or to the non-moving part of the apparatus in an area, which extends in axial direction beyond said wire receiving surface.

As described above, the main advantage over the closest prior art, US6098610A, is the reduction of the diameter of the support roller and thus the wire receiving surface. This is achieved by the fact that the rotor and the stator are fastened/placed in an area, which extends in axial direction beyond said wire receiving surface. Due to the reduction of the diameter of the support roller (and thus the wire receiving surface) the space between the roller units is increased without increasing the overall space required for the formation of a wire web. Furthermore, it is possible to use the space enclosed by the support roller in the area of the wire receiving surface for receiving and circulating a fluid, such as oil lubrication, e.g. for the temperature control of the roller unit. The support and the support roller can be arranged much closer to each other, the fluid, e.g. oil, used for lubricating the bearings between the support and the support roller can be used to effectively keep the roller unit at a defined temperature, preventing the latter from expanding during operation. By the same means the roller unit can be pre-heated to and kept at a desired temperature during operation using heated oil provided to the inside of the roller unit. Preferably, the oil is also used to lubricate the bearings between the support and the support roller.

No electrical power needs to be transported within the support, since all active parts of the motor are close to the proximal end or base of the support or even connected thereto.

To reduce the footprint of the apparatus, e.g. a wire saw, it is favorable to have the motor and the wire guide rolls on the same side of the supporting structure. This allows a back to back arrangement of wire saws.

To allow a highly dynamic operation of the wire web consisting of consecutive acceleration and deceleration phases one shortly after the other, the invention guarantees a minimal moment of inertia of the whole driving system consisting of the support roller itself, the motor, the connecting means and the bearings.

The very expensive carbon fiber reinforcement of the sleeve known from prior art can be reduced, because the bearings can be arranged directly beneath the sleeve. The inventive assembly however is still stiff enough to provide a precise cut. A light-weighted sleeve results also in a significant reduction of the moment of inertia, which is important for the pilgrim mode.

The invention provides a very compact assembly due to the fact that the rotor sits directly on the support roller. The very compact assembly allows also the exchange of the whole assembly as one unit increasing uptime dramatically.

In one embodiment, the rotor is an internal rotor surrounded by the stator. This allows for an easy construction, since the electrical connections for the stator may run outside of the support. (Of course an opposite construction lies within the frame of the invention)

In another embodiment, bearings are provided between the support and the support roller and the bearings border a space between support and support roller for receiving a fluid, e.g. lubricating oil, for controlling the temperature within the roller unit. Thermal expansion is avoided efficiently since the fluid circulates in that space. Warmed fluid is continuously removed from that space and replaced by a cooled fluid from outside, e.g. by a pump, which is preferably driven by the same motor, which also drives the support roller.

In a still further embodiment said space is arranged in an area surrounded by the wire receiving surface. In this region the heat production due to the heavy load transmitted by the wire web and by its friction is very high. In contrast to prior art this region is not used for the motor, but may be efficiently used for circulating cooling/heating fluid/oil in that space.

In another embodiment the bearing on each side of the space comprises a roller bearing and a spindle bearing. Due to the temperature control it is not necessary to use a locating bearing.

The above objects are also achieved by an apparatus for driving a wire or wire-like objects, the apparatus comprising at least two roller units, each roller unit comprising:
a support, having a proximal end and a distal end, the support being held in the apparatus by its proximal end.
a support roller which is rotatably mounted to the support and which surrounds the support,
a wire receiving surface which is provided on the support roller for communicating with the wire,
wherein the distal end of support is formed by an extending portion which extends in axial direction beyond said support roller,
wherein the support extending portions of two adjacent roller units are fixedly connected with each other or with a non-moving member of the apparatus by a releasable connection means.

In this embodiment the supports extend through the support rollers and the distal ends of the supports are releasably connected to each other or a member of the apparatus. The distal ends are easily accessible. The motor can be arranged in the area of the proximal end, where the supports are attached to the apparatus, e.g. to a base structure. The releasable connection means guarantees a stiff construction for holding the distance and thus the wire web at a constant length. In the case of failures/maintenance the roller units are easy accessible by removing said connection means.

In an embodiment the releasable connection means is a preferably longitudinal strut, which may be easily attached/detached by an operator. This is a preferred and easy-to-handle embodiment of the invention.

The above objects are also achieved by an apparatus for driving a wire or wire-like objects, the apparatus comprising at least one roller unit, the roller unit comprises:
a support,
a support roller which is rotatably mounted to the support,
a wire receiving surface which is provided on the support roller for communicating with the wire, said wire receiving surface is formed on a sleeve which sits over the support roller, wherein the sleeve is attached to the support roller by a releasable clamping means.

This embodiment allows an easy replacement of the sleeve. In contrast to prior art only the sleeve has to be exchanged and the replacement procedure is not time consuming.

A further advantage of this system is that it does not need much space (foot print), allowing for a small diameter of the roller unit. The clamping connection can be released easily in such a way, that the sleeve can be moved off from the support roller essentially without friction. The operating means presses the fluid in the clamping state and allows the fluid to relax in the releasing state. In this way no device is needed to pull the sleeve of the support roller with great force, as is the case in prior art, e.g. US6098610A.

Preferably, the clamping set is applied on the distal side of the roller unit (the proximal side is attached to the apparatus) so that it can be accessed easily. The clamping set may be also integrated in the support roller, as to further reduce the diameter of the roller unit.

In an embodiment the clamping means comprise a fluid chamber located between the sleeve and the support roller and an operating means for pressing the fluid in the fluid chamber as to press the walls of the fluid chamber against support roller and sleeve.

The roller unit has a support roller and a sleeve that are connected by means of a clamping set consisting of a tube filled with a fluid, the volume of that tube being changeable as to press the walls of the tube to the support roller and the sleeve.

In an embodiment the fluid chamber extends around the circumference of the support roller and preferably the fluid chamber has a tube-like shape. This allow for an uniform clamping force around the whole circumference (cylindrical surface).

In another embodiment said support is surrounded by the support roller. This allows for a stable construction with practically no mechanical deflections.

In another embodiment said wire receiving surface is formed on a sleeve which sits over the support roller. Usually, the wear on the wire receiving surface is very high. A bad sleeve may be easily replaced by a new sleeve.

In an embodiment grooves are formed on said wire receiving surface for guiding the wire. This allows for exactly defined cuts.

The invention consists also in a wire saw comprising a sawing wire and at least one wire guide apparatus for driving and guiding the sawing wire, wherein the wire guide apparatus is an apparatus according to any of the embodiments given in this specification.

The invention consists also in a wire saw comprising a sawing wire, at least one wire guide apparatus for driving and guiding the sawing wire and a wire reservoir for winding and/or unwinding of wire, wherein the wire reservoir is an apparatus according to any of the embodiments given in this specification.

The invention generally extends to devices such as a wire saw with at least a support for a wire coil such as a wire guide roller or a wire spool for holding wires. The invention can also be used for wire coils. Wire coils are normally driven by motors in order to wind and unwind the wire as it is fed into and out of the machine.

The invention is not restricted to driving of wires, but also extends to wire-like objects, such as belts, cords, bands, or the like.

The invention also comprises all possible combinations of embodiments and inventive features. Particularly, also the main embodiments of the invention as given in the independent claims may be combined in any manner to realize the inventive ideas.

Further embodiments of the invention are indicated in the figures and in the dependent claims. The list of reference marks forms part of the disclosure. The invention will now be explained in detail by the drawings. In the drawings:
Fig. 1 shows schematically a wire saw,
Fig. 2 shows a wire saw with wire reservoirs according to prior art,
Fig. 3 shows a roller unit according to the invention,
Fig. 4 shows a sleeve with grooves in the wire receiving surface,
Fig. 5 shows a clamping means for fixedly connecting the sleeve with a support roller,
Fig. 5a shows a variant of the embodiment of Fig. 5,
Fig. 6 shows an embodiment with an releasable connecting means for connecting distal ends of adjacent supports.

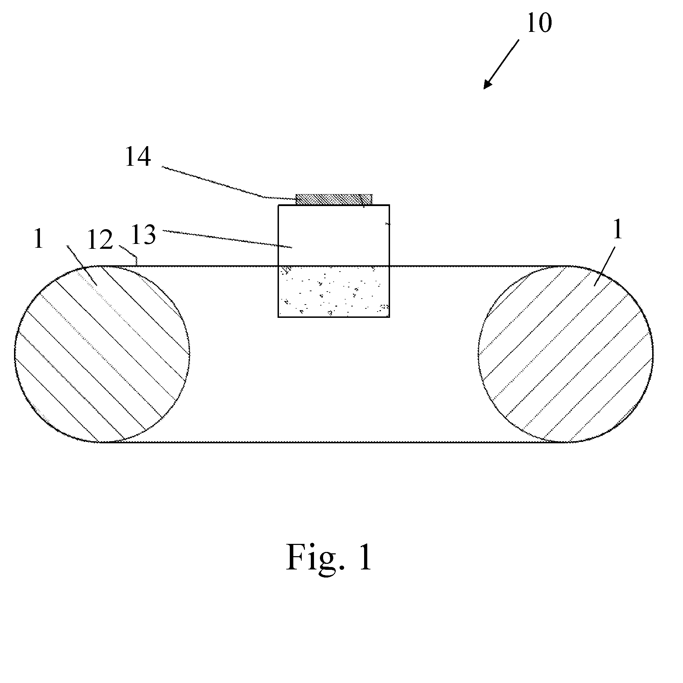

Fig. 1 shows schematically a wire saw 10 comprising two roller units 1 for driving and guiding a cutting wire 12. The wire 12 usually runs in multiple loops around the roller units 1 thus forming a wire web. An object 13 to be cut into a plurality of wafers is continuously fed thru the wire web. The object 13 may be e.g. a single-crystalline or poly-crystalline ingot or brick of Silicon, Sapphire or any other material. Usually a holding plate 14 is glued to the upper surface of object 13 for supporting object 13 during the sawing procedure.

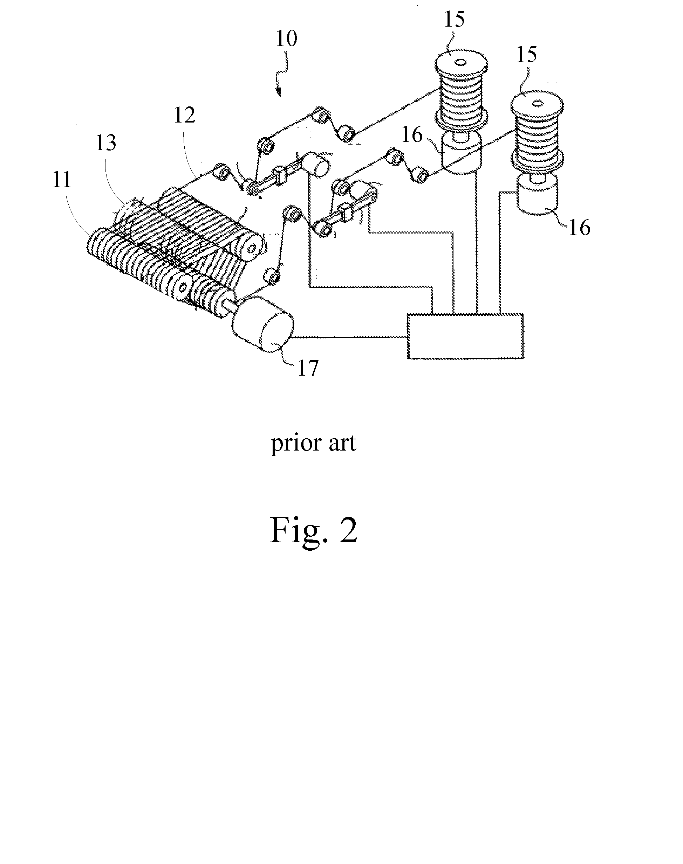

Fig. 2 shows in a perspective view a wire saw 10 according to the prior art. Roller units 11 and cutting wire 12 form a wire web for cutting an object 13. An external drive 17 is provided for driving the roller units 11. As already mentioned above, a complicated transmission chain and bearing is necessary between drive and roller unit 11 to account for the high load and for thermal expansion of the roller units 11. Wire reservoirs 15 are in direct communication with the roller units 11 and the wire web. Wire reservoirs 15 are in the form of wire coils for continuously winding and/or unwinding of cutting wire 12. Drives 16 are provided for driving the wire reservoirs 15. The motion of drives 16 is correspondingly synchronized to the motion of the roller unit drive 17. As will be apparent from the following the present invention is e.g. applicable to a wire saw of Fig. 2.

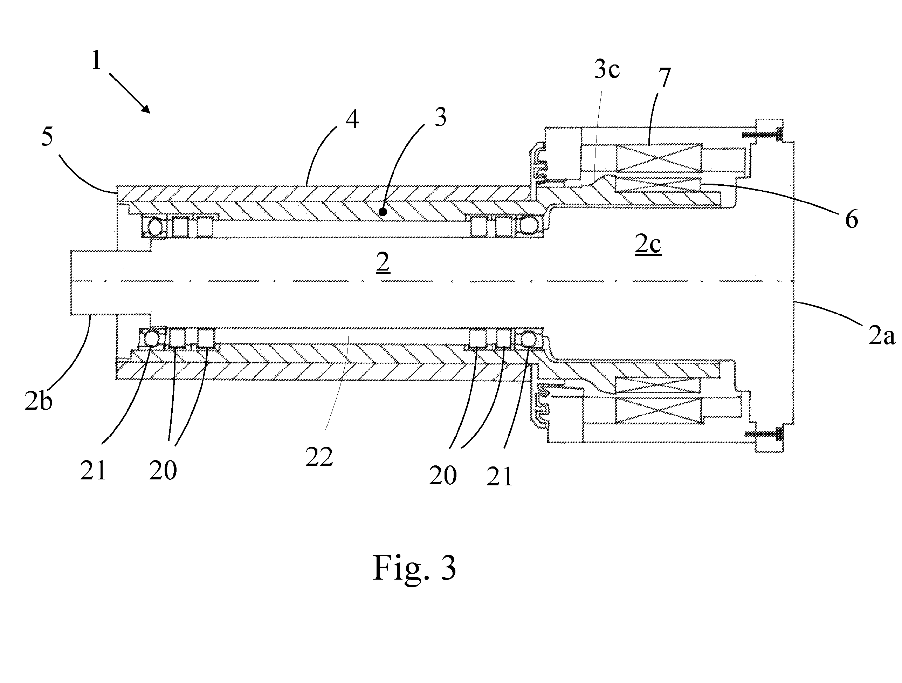

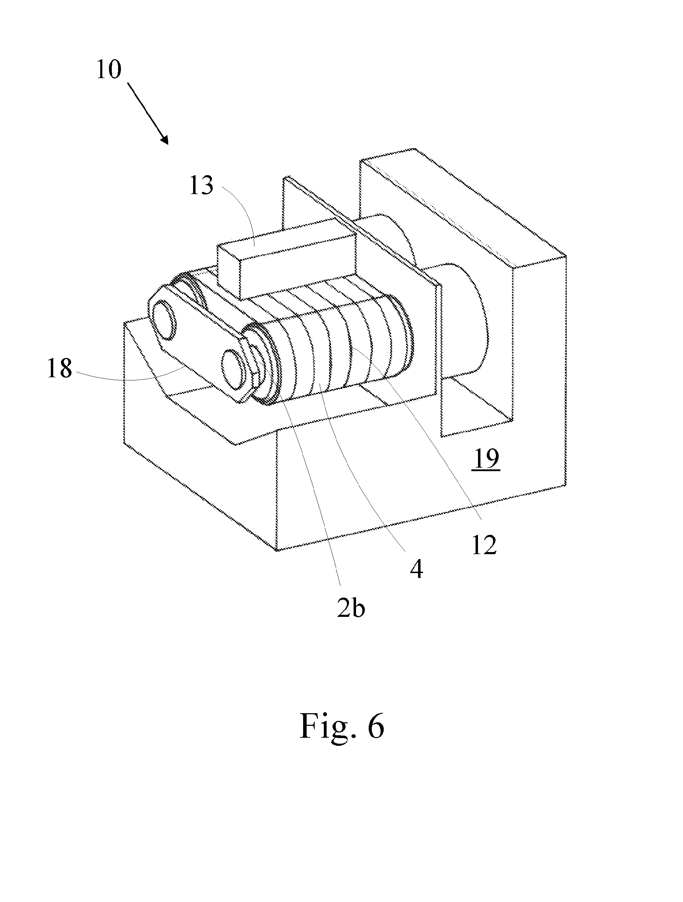

Fig. 3 shows an apparatus according to the invention. A roller unit 1 is comprised of a stationary support 2 and a support roller 3 which surrounds the support 2 and which is rotatably mounted to the support 2. Support 2 has a proximal end 2a for being held in the apparatus, e.g. a wire guide apparatus, a wire reservoir or a wire saw, by means of a non-moving base structure (see fig. 6). A distal end 2b of the support 2 may be a free end and may axially extend beyond the wire receiving area. An embodiment of a free distal end 2b is shown in Fig. 6. On the opposite side a portion 2c of the stator 7 extends axially beyond the wire receiving area 4.

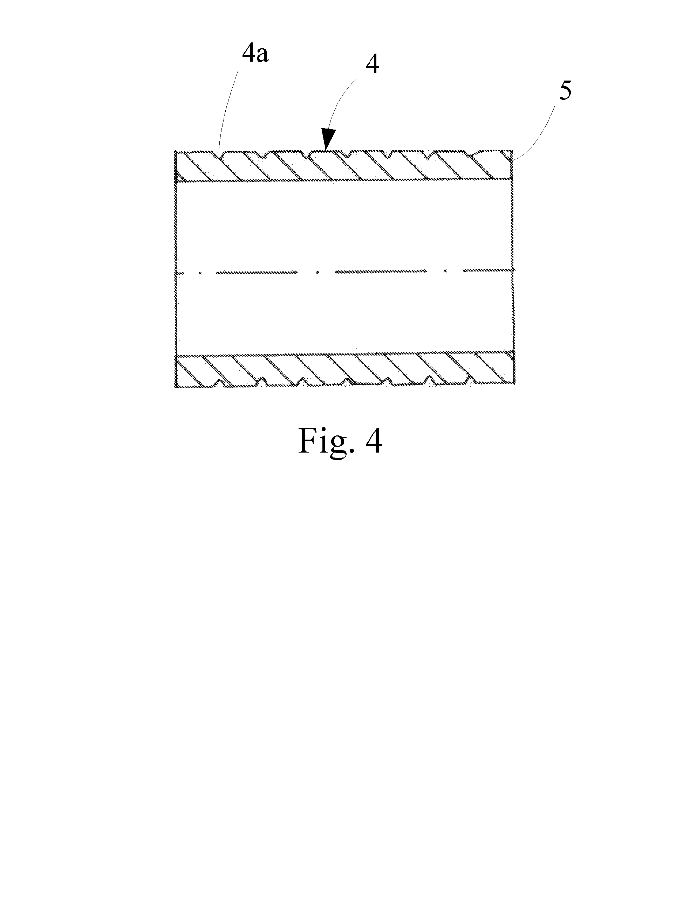

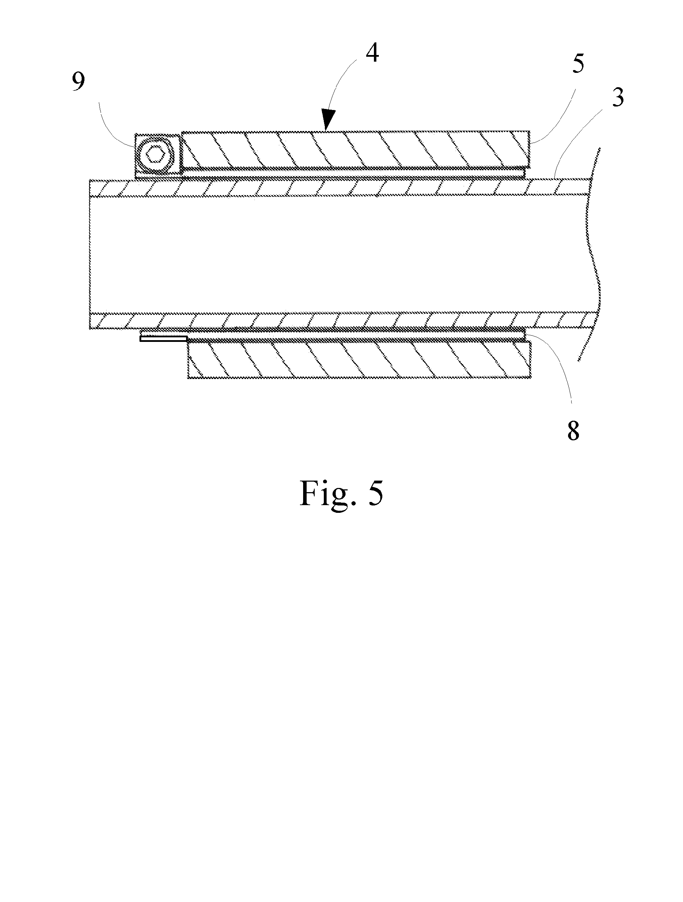

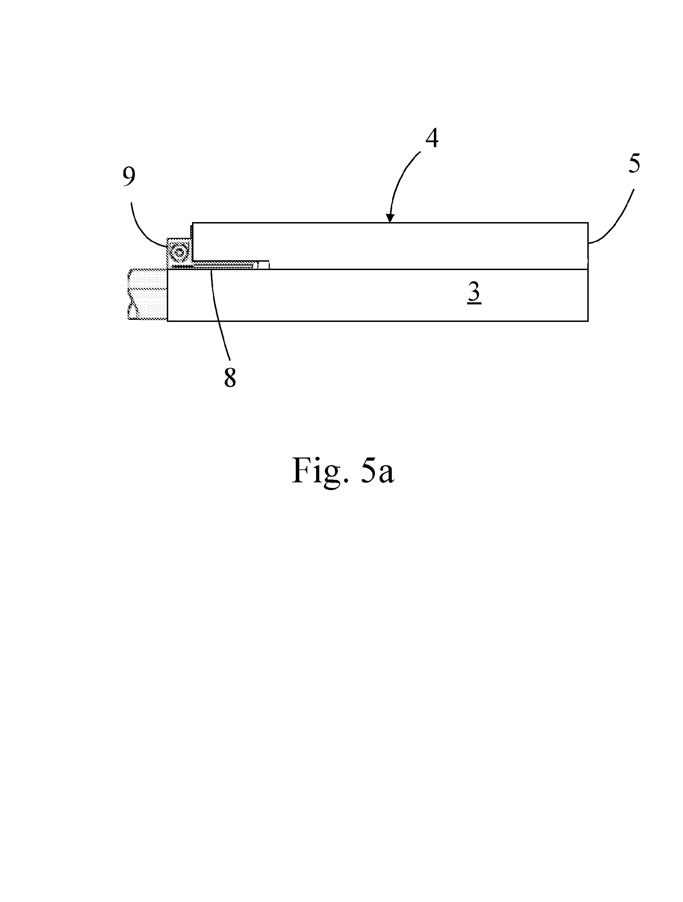

A sleeve 5 having a wire receiving surface 4 sits over the support roller 3. Sleeve 5 and support roller 3 are fixedly connected with each other. As will be described with respect to Fig. 5 later, a releasable connection between sleeve 5 and support roller 3 may be provided. In operational state, a wire 12 abuts against the wire receiving surface 4. For simplicity, windings of the cutting wire on the sleeve 5 and rills for holding the wire are not shown in Fig. 3. The support roller 3 transmits its rotational motion via wire receiving surface 4 to the wire. The wire and/or wire web is driven, guided and supported by the roller unit 1. As shown in more detail in Fig. 4, the wire receiving surface 4 may have a plurality of circumferential or spiral guide grooves 4a in it. In such a way, wire 12 of a wire web has an exactly pre-defined path. Is has to be mentioned that the wire receiving surface 4 could also be a surface of the support roller 3. In that case there would not be a sleeve 5 at all. However, an exchangeable sleeve 5 is preferred as to account for the wear of the wire receiving surface 4.

The drive of a roller unit 1 comprises a motor having a rotor 6 and a stator 7. The rotor 6 is fixedly attached to the support roller 3 and the stator 7 is fixedly attached to the support 2 or to another stationary (non-moving) part of the apparatus. Rotor 6 and stator 7 are attached to the support roller 3 and the support 2, respectively, in an area, which axially extends beyond the wire receiving surface 4. As can be seen from Fig. 3, support roller 3 has an extending portion 3c which is spaced from the portion surrounded by the sleeve 5.

In the present embodiment, rotor 6 is arranged around the support roller 3 and stator 7 is arranged outside of rotor 6. Thus, rotor 6 is formed as an internal rotor 7. However, it is also possible to arrange the stator 7 within the rotor 6. In that case rotor 6 would be an external rotor and the support 2 should have an opening or recess for accommodation of stator 7 and electrical power connections. The advantage of the embodiment of Fig. 3 consists in the fact, that the support 2 does not need a hole/recess that would have to be drilled for accommodation of the stator 7 and for electrical cables supplying the stator with electrical power.

In an embodiment, the stator is formed by coils and the rotor by permanent magnets. Even though this is clearly beneficial, because the coils that have to be supplied with electric energy do not move, this is not essential to the invention. In principle, the stator may be made of permanent magnets and the rotor of coils or both the rotor and the stator may be made from electromagnets.

In the above embodiment, the stator 7 is shown outside of the rotor 6 and thus forms an internal rotor 6. The stator 7, however, may also be placed on the inside of the rotor 6 to form an outer rotor-type motor.

The bearings between support 2 and support roller 3 are indicated by the numerals 20 and 21. The support roller 3 sits on roller bearings 20.

In the embodiment shown in Fig. 3, a combination of roller bearings 20 and spindle bearings 21 (ball-like bearings) is used to produce a reliable bearing connection between support 2 and support roller 3. The embodiment has two bearing portions (left and right one), each axially arranged in an edge region of the wire guide area. An annular space 22 or chamber is formed between the two bearing portions and between the outer surface of support 2 and the inner surface of support roller 3.

The shown bearing assembly has no classical locating/floating bearing. This is made possible because the space 22 between support roller 3 and support 2 is kept at a constant temperature by e.g. circulating oil lubrication.

In an embodiment it is of course possible to use a double spindle-bearing on one side, thereby forming a locating bearing.

An advantage of the invention consists in the fact that the bearings 20, 21 support the support roller 3 and the wire receiving surface 4 and the motor part all in one.

Fig. 4 shows an embodiment of a sleeve 5 for use with a roller unit 1. Guide grooves 4a are formed on its outer surface for receiving and guiding wire.

Fig. 5 shows an embodiment of how to releasably connect a sleeve 5 on a support roller 3. A clamping means comprises a fluid camber 8 and an operating means 9. Fluid chamber 8 is arranged between the outer surface of the support roller 3 and the inner surface of the sleeve 5. Fluid chamber 8 has flexible walls as to abut against the support roller 3 and the sleeve 5. When operating means 9 is operated, e.g. via a screw or a fastener, fluid is displaced or squeezed out from a small reservoir (in Fig. 5 left from fluid chamber 8 and below the screw) and pressed/forced in the chamber 8. Also the volume of the chamber may be reduced by the fastener. The chamber walls exert a force against the support roller 3 and the sleeve 5, thus fixedly connecting them to each other. When releasing the clamping mechanism, the pressure in the fluid chamber 8 drops again, and the force of the chamber walls reduces. Sleeve 5 can be easily detached from support roller 3. As shown in the preferred embodiment of Fig. 5, the fluid chamber 8 extends around the circumference of the support roller 3 and has a tube-like shape.

Fig. 5a shows a preferred embodiment of how to releasably connect the sleeve 5 on the support roller 3. Here, the clamping means does not extend over the complete sleeve 5. The fluid chamber 8 extends from one end of the sleeve 5 only partially in the space between the sleeve 5 and the support roller 3. According to an embodiment of Fig. 5a it is also possible to have multiple clamping means.

Since the tube-like fluid chamber 8 extends around the circumference of support roller 3, the support roller 3 and the sleeve 5 are connected in a concentric manner, preventing wobbling when the support roller 3 is rotating. Only the means for pressurizing the fluid need to be balanced out.

Fig. 6 shows an embodiment of an apparatus in form of a wire saw 10 having at least two roller units 1. Each roller unit comprises a support 2, having a proximal end 2a and a distal end 2b, the support 2 being held in the apparatus by its proximal end 2b, e.g. at a base 19. The distal end 2b of support 2 is free (i.e. is not supported by the base 19) and formed by an extending portion which extends in axial direction beyond said support roller 3.

Adjacent roller units 1 drive and support a wire web. The support extending portions of the two adjacent roller units 1 are fixedly connected with each other by a releasable connection means 18. Preferably, the releasable connection means 18 is a longitudinal strut as shown in Fig. 6.

As can be seen from Fig. 6 the distal ends 2b of the supports 2 are freely accessible from outside allowing an easy de-/attachment of a connecting strut between the two roller units 1. In the preferred embodiment of Fig. 6 the distal ends 2b are free ends and connected only to each other by the releasable connecting means 18. There is no connection to any other part of the apparatus providing a high degree of accessibility.

Instead of connecting the distal ends 2b of support 2 with each other it is also possible to connect them with other stationary members of the apparatus.

The invention is not restricted to the embodiments shown. Particularly, it is possible to combine individual features of the invention.

### List of reference signs

- 1 -: roller unit
- 2 -: support
- 2a -: proximal end of support
- 2b -: distal end of support
- 3 -: support roller
- 4 -: wire receiving surface
- 4a -: wire receiving groove
- 5 -: sleeve
- 6 -: stator
- 7 -: rotor
- 8 -: fluid chamber
- 9 -: operating means
- 10 -: wire saw
- 11 -: roller unit
- 12 -: sawing wire
- 13 -: ingot
- 14 -: plate for holding ingot
- 15 -: wire reservoir
- 16 -: drive for wire reservoir
- 17 -: drive for support roller
- 18 -: connecting means
- 19 -: base structure
- 20 -: roller bearing
- 21 -: spindle bearing
- 22 -: space between bearings

## Claims

1. Apparatus for driving and/or spooling a wire (12) or wire-like objects,
such as a wire guide apparatus for guiding a wire, a wire winding apparatus for winding and/or unwinding of wire or a coil producing apparatus for producing a coil from a wire,
the apparatus comprising at least one roller unit (1), the roller unit (1) comprises:
a support (2),
a support roller (3) which is rotatably mounted to the support (2),
a wire receiving surface (4) which is provided on the support roller (3) for communicating with the wire (12), wherein the support roller (3) extends in axial direction beyond the wire receiving surface (4) at least at one side,
a drive for driving the support roller (3) with respect to the support (2), the drive comprising a stator (6) and a rotor (7),
the rotor (6) being fastened to the support roller (3) and the stator (7) being fastened to the support (2) or to another non-moving part of the apparatus,
wherein the rotor (6) and the stator (7) are arranged in an area, which extends in axial direction beyond said wire receiving surface (4).

2. Apparatus according to claim 1, wherein the rotor (6) is an internal rotor surrounded by the stator (7).

3. Apparatus according to any of claims 1 to 2, wherein bearings (20, 21) are provided between the support (2) and the support roller (3) and wherein the bearings (20, 21) border a space (22) between support (2) and support roller (3) for receiving a fluid, e.g. lubricating oil, for controlling the temperature within the roller unit (1).

4. Apparatus according to claim 3, wherein the space (22) is arranged in an area surrounded by the wire receiving surface (4).

5. Apparatus according to any of claims 3 to 4, wherein the bearings on each side of the space (22) comprise a roller bearing (20) and a spindle bearing (21).

6. Apparatus for driving and/or spooling a wire or wire-like objects, preferably according to any of the preceding claims, the apparatus comprising at least two roller units (1), each roller unit comprising:
a support (2), having a proximal end (2a) and a distal end (2b), the support (2) being held in the apparatus by its proximal end (2b),
a support roller (3) which is rotatably mounted to the support (2) and which surrounds the support (2),
a wire receiving surface (4) which is provided on the support roller (3) for communicating with the wire,
wherein the distal end (2b) of support (2) is formed by an extending portion which extends in axial direction beyond said support roller (3),
wherein the support extending portions of two adjacent roller units (1) are releasably connected with each other or with a non-moving member of the apparatus by connection means (18).

7. Apparatus according to claim 6, wherein the connection means (18) is a strut.

8. Apparatus for driving and/or spooling a wire or wire-like objects, preferably according to any of the preceding claims, the apparatus comprising at least one roller unit (1), the roller unit (1) comprises:
a support (2),
a support roller (3) which is rotatably mounted to the support (2),
a wire receiving surface (4) which is provided on the support roller (3) for communicating with the wire, said wire receiving surface (4) is formed on a sleeve (5) which sits over the support roller (3), wherein the sleeve (5) is attached to the support roller (3) by a releasable clamping means (8, 9).

9. Apparatus according to claim 8, wherein the clamping means comprise a fluid chamber (8) located between the sleeve (5) and the support roller (3) and an operating means (9) for pressurizing the fluid in the fluid chamber (8) as to press the walls of the fluid chamber (8) against support roller (3) and sleeve (5).

10. Apparatus according to claim 9, wherein the fluid chamber (8) extends around the circumference of the support roller (3) and wherein preferably the fluid chamber (8) has a tube-like shape.

11. Apparatus according to any of claims 1 to 10, wherein said support (2) is surrounded by the support roller (3).

12. Apparatus according to any of claims 1 to 11, wherein said wire receiving surface (4) is formed on a sleeve (5) which sits over the support roller (3).

13. Apparatus according to any of claims 1 to 12, wherein grooves (4a) are formed on said wire receiving surface (4) for guiding the wire.

14. Wire saw (10) comprising sawing wire (12) and at least one wire guide apparatus for driving and guiding the sawing wire, wherein the wire guide apparatus is an apparatus according to any of the claims 1 to 13.

15. Wire saw (10), preferably according to claim 14, comprising a sawing wire (12), at least one wire guide apparatus for driving and guiding the sawing wire and a wire reservoir for winding and/or unwinding of wire, wherein the wire reservoir comprises an apparatus according to any of the claims 1 to 13.
